# FASCICULE DE BREVET EUROPEEN

(11) **EP 2 240 941 B1**
(45) Date de publication et mention de la délivrance du brevet: **26.10.2016**
(21) Numéro de dépôt: 08865226.8
(22) Date de dépôt: 22.12.2008
(51) Int. Cl.: G21F 5/008

(54) **CONTENEUR DE TRANSPORT POUR ASSEMBLAGE DE COMBUSTIBLE NUCLÉAIRE, ET PROCÉDÉ DE TRANSPORT D'UN ASSEMBLAGE DE COMBUSTIBLE NUCLÉAIRE**
TRANSPORTBEHÄLTER FÜR KERNBRENNSTABBÜNDEL UND VERFAHREN ZUM TRANSPORT EINES KERNBRENNSTABBÜNDELS
TRANSPORT CONTAINER FOR NUCLEAR FUEL ASSEMBLY AND METHOD OF TRANSPORTING A NUCLEAR FUEL ASSEMBLY

(30) Priorité: 26.12.2007 FR 0760368
(43) Date de publication de la demande: 20.10.2010
(73) Titulaire: AREVA NP, 92400 Courbevoie (FR)
(72) Inventeur: WEGELER, Pierre, F-01800 Villieu (FR); GAUTHIER, Jacques, F-69270 Cailloux Sur Fontaines (FR)
(74) Mandataire: Lavoix
(86) Numéro de dépôt international: PCT/FR2008/052400
(87) Numéro de publication internationale: WO 2009/081078

(56) Documents cités:
- DE-A1- 2 942 092
- DE-A1- 19 908 490
- FR-A- 2 774 800
- US-B1- 6 748 042

## Description

La présente invention concerne un conteneur de transport pour assemblage de combustible nucléaire non irradié.

Les assemblages de combustible nucléaire neufs (ou non irradiés) sont généralement fabriqués sur un site de production, puis transportés jusqu'à une centrale nucléaire.

Lors du transport, les assemblages de combustible nucléaire doivent être protégés pour conserver leur intégrité en conditions normales de transport, afin d'assurer leur utilisation ultérieure dans un réacteur nucléaire dans les conditions de sûreté et de performance requises, et pour minimiser les risques de défaillance en cas d'accident au cours du transport, notamment pour éviter une dispersion de matière fissile et de se rapprocher des conditions de criticité.

FR 2 774 800 décrit un conteneur de transport d'assemblages de combustible nucléaire comprenant un emballage interne délimitant deux logements individuels pour des assemblages de combustible nucléaire, et un emballage externe formée de deux demi-coquilles, l'emballage interne étant suspendu à l'intérieur de l'emballage externe. DE 199 08 490 décrit un conteneur analogue.

Cet agencement a pour but de protéger les assemblages de combustible nucléaire neufs des chocs et des vibrations, grâce aux deux emballages emboîtés et aux moyens de suspension entre les deux emballages.

Néanmoins, ce conteneur est particulièrement encombrant et lourd. Il ne peut être stocké qu'à l'horizontale sur le sol, et son importante surface d'occupation au sol limite le nombre de conteneurs pouvant être entreposés sur le site d'une centrale nucléaire. Ses dimensions importantes imposent aux opérateurs de travailler en hauteur, par exemple pour arrimer le conteneur sur un plateau de transport. Enfin, un nombre important de transports est nécessaire pour assurer la livraison du combustible dans le respect de la réglementation. Ces caractéristiques augmentent considérablement les coûts de transport et d'exploitation de ce type de conteneur.

Un but de la présente invention est de proposer un conteneur de transport d'assemblage de combustible nucléaire qui permette de diminuer sensiblement les coûts de transport et d'améliorer les conditions de son exploitation.

A cet effet, l'invention propose un conteneur de transport pour assemblage de combustible nucléaire non irradié, selon la revendication 1.

Selon d'autres modes de réalisation, le conteneur comprend une ou plusieurs des caractéristiques suivantes, prise(s) isolément ou selon toutes les combinaisons techniquement possibles :
- il comprend des faces latérales délimitant le ou chaque logement individuel qui sont sensiblement lisses sur toute la longueur du logement ;
- le jeu transversal entre des faces latérales du ou de chaque logement individuel et un assemblage destiné à être reçu à l'intérieur du logement est choisi de telle façon que les détériorations de l'assemblage par mouvement relatif dans le logement soient évitées ;
- le jeu transversal est adapté par ajout de plaques fixées sur les surfaces internes des logements ;
- le ou chaque logement possède une section quadrangulaire définie par deux paires de faces latérales disposées en V, la coque comprenant pour le ou chaque logement un support portant une des paires de faces latérales disposées en V, une porte portant l'autre parmi les deux paires de faces latérales disposées en V, et des moyens de fixation de la porte sur le support permettent d'ajuster la position de la porte et du support suivant la direction transversale passant par les lignes d'intersection des paires de face disposées en V ;
- la coque comprend une couche intermédiaire d'isolation neutrophage et une couche intermédiaire de protection contre les chocs ;
- une couche de protection thermique est ajoutée à la couche de protection contre les chocs ;
- la couche de protection entoure la couche d'isolation neutrophage ; et
- la coque comprend une couche intermédiaire de séparation métallique séparant la couche d'isolation neutrophage et la couche de protection.

L'invention concerne également un procédé de transport d'au moins un assemblage de combustible nucléaire, dans lequel on dispose au moins un assemblage de combustible nucléaire non irradié dans un conteneur tel que défini ci-dessus, on dispose le conteneur sur un véhicule de transport de sorte que l'enveloppe du conteneur assure à elle seule la protection de l'assemblage de combustible nucléaire en cas de chute du conteneur, et on transporte le conteneur d'un premier site à un deuxième site.

Selon un mode de mise en oeuvre on dispose des éléments de suspensions entre la coque et une surface de dépose.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'un assemblage de combustible nucléaire ;
- la figure 2 est une vue en perspective d'un conteneur conforme à l'invention, prévu pour transporter deux assemblages de combustible nucléaire selon la figure 1 ;
- les figures 3 et 4 sont des vues en coupe du conteneur de la figure 2, respectivement selon les plans III-III et IV-IV ;
- les figures 5 et 6 sont des vues du conteneur de la figure 2 illustrant deux modes de chargement du conteneur ;
- les figures 7 et 8 sont des vues analogues à celles des figures 5 et 6, illustrant le chargement d'un conteneur selon une variante de l'invention ;
- la figure 9 est une vue schématique d'un dispositif d'entreposage d'un conteneur selon la figure 2 ; et
- la figure 10 est une vue schématique de côté d'un véhicule transportant un conteneur selon la figure 2.

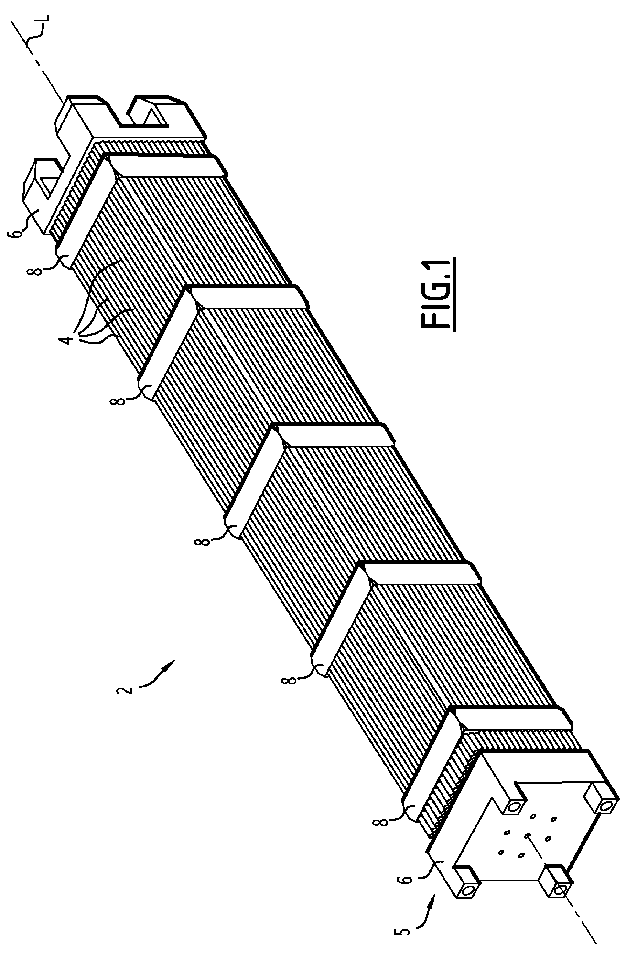

L'assemblage de combustible nucléaire 2 de la figure 1 est du type destiné à être utilisé dans les réacteurs nucléaires à eau légère pressurisée (PWR).

L'assemblage 2 est allongé suivant une direction longitudinale L. Il comprend un faisceau de crayons 4 de combustible nucléaire, et une ossature 5 de support des crayons 4. L'assemblage 2 présente dans l'exemple illustré une section carrée.

Les crayons 4 se présentent sous la forme de tubes remplis de pastilles de combustible nucléaire et fermés à leurs extrémités par des bouchons.

L'ossature 5 comprend de manière classique deux embouts 6 disposés aux extrémités longitudinales de l'assemblage 2, des tubes-guides (non visibles) s'étendant longitudinalement entre les embouts 6, et des grilles 8 de maintien des crayons 6. Les tubes-guides sont fixés à leurs extrémités sur les embouts 6. Les grilles 8 sont fixées sur les tubes-guides et réparties entre les embouts 6. Les crayons 4 traversent les grilles 8 qui les maintiennent longitudinalement et transversalement.

Les assemblages de combustible nucléaire sont généralement fabriqués dans un site de fabrication, puis transportés jusqu'à une centrale nucléaire, où ils seront entreposés avant d'être introduits dans le coeur d'un réacteur nucléaire.

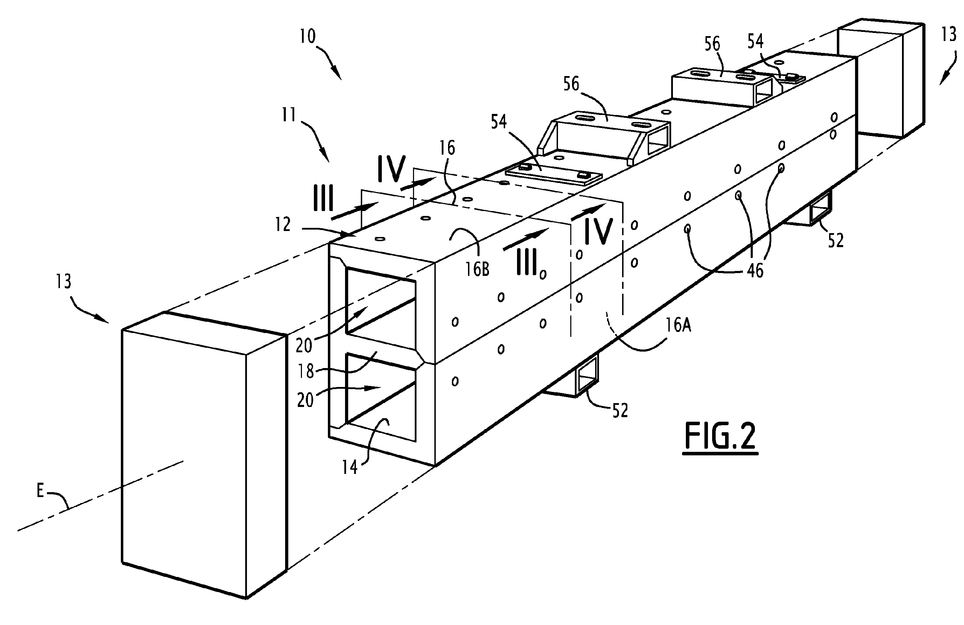

La figure 2 illustre un conteneur 10 conforme à l'invention, permettant de transporter l'assemblage 2 d'un site de fabrication jusqu'à une centrale nucléaire.

Le conteneur 10 comprend une unique enveloppe 11 de réception d'assemblages de combustible nucléaire, l'enveloppe 11 étant formée d'une coque 12 et deux couvercles 13.

La coque 12 est tubulaire et allongée longitudinalement suivant une direction longitudinale E. Elle possède une surface interne 14 délimitant une cavité interne, et une surface externe 16.

La coque 12 comprend une cloison 18 longitudinale séparant la cavité interne de la coque 12 en deux logements 20 individuels distincts et séparés. Les logements 20 s'étendent parallèlement de part et d'autre de la cloison 18, suivant la direction longitudinale E de la coque 12.

Chaque logement 20 est destiné à recevoir un assemblage de combustible nucléaire 2 tel que celui de la figure 1, et présente une section correspondante, ici une section carrée.

Chaque logement 20 peut au besoin recevoir une boîte à crayons contenant des crayons de combustible destinés à être assemblés pour constituer des assemblages de combustible, ou destinés à être utilisés pour réparer des assemblages de combustible précédemment livrés.

Les couvercles 13 sont prévus pour fermer les logements 20 aux extrémités longitudinales de la coque 12.

De manière classique, chaque couvercle 13 comprend des plaques métalliques enserrant un matériau dissipateur d'énergie tel que du balsa, une mousse ou une structure alvéolaire. Les couvercles 13 constituent des dispositifs dissipateurs d'énergie en cas de chute axiale du conteneur 10.

En variante, ils possèdent une structure interne analogue à celle de la coque 12, qui est décrite ci-dessous.

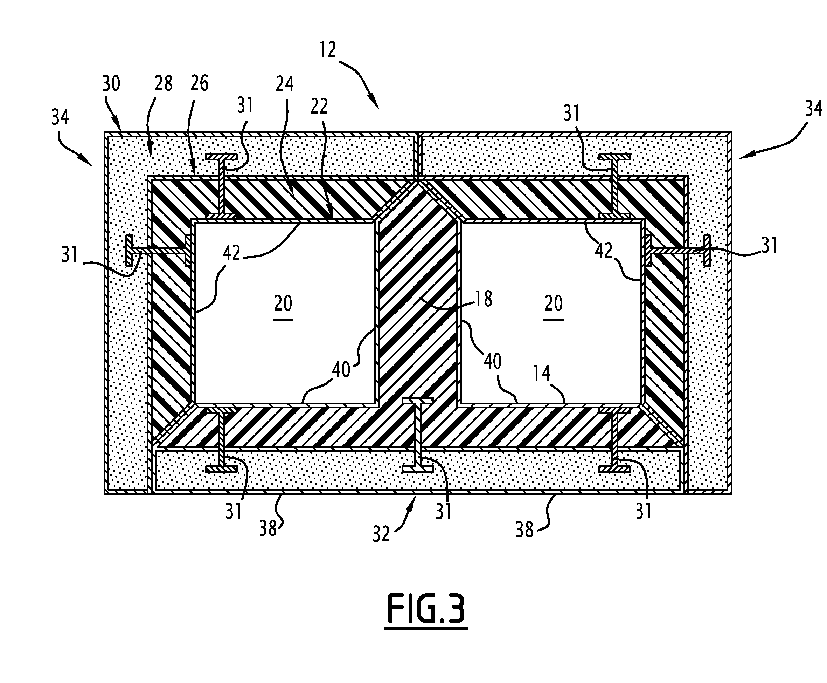

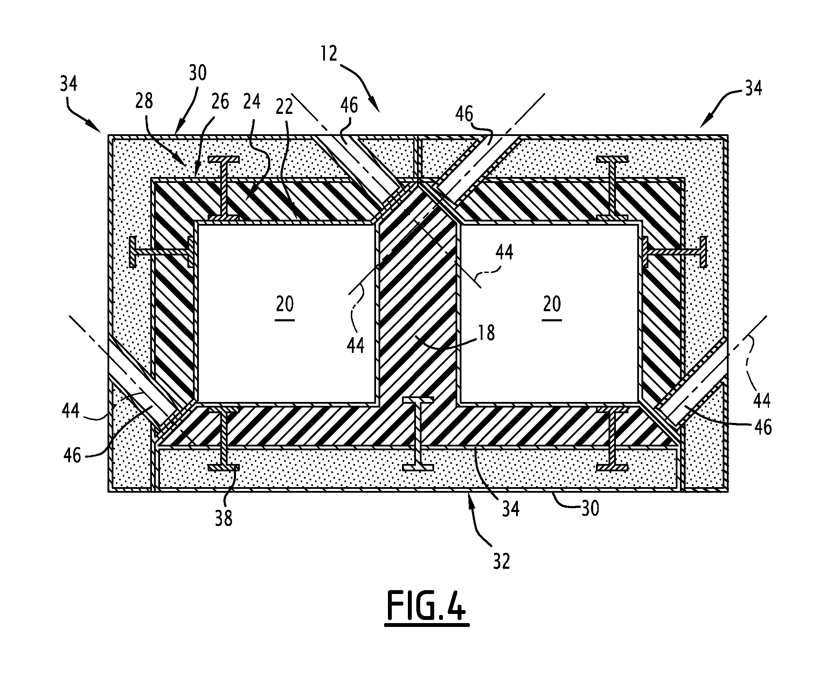

La structure interne de la coque 12 est illustrée sur les figures 3 et 4 qui sont des vues en coupe transversale de la coque 12.

Telle que représentée sur la figure 3, la coque 12 est stratifiée et comprend plusieurs couches superposées.

Plus précisément, elle comprend, depuis l'intérieur vers l'extérieur de la coque 12, une couche interne métallique 22, une couche d'isolation neutronique 24, une couche intermédiaire 26 métallique, une couche de protection 28 et une couche externe métallique 30.

Les couches intermédiaires 24, 26 et 28 remplissent la coque 12 entre la couche interne 22 et la couche externe 30, sensiblement sans laisser de vide.

La couche interne 22 définit les logements 20. La couche externe 30 définit la peau externe de la coque 12. La couche intermédiaire 26 sépare la couche d'isolation 24 et la couche de protection 28.

La couche de protection 28 est destinée à absorber l'énergie de chocs mécaniques violents et à isoler thermiquement les assemblages de combustible 2 vis-à-vis de l'extérieur. Elle est de préférence solide pour contribuer à la résistance mécanique de la coque 12. Elle est par exemple formée par une mousse haute densité ou du balsa.

La couche d'isolation 24 est une couche neutrophage destinée à absorber des neutrons émis par des assemblages de combustible nucléaire reçus dans les logements 20. Elle est de préférence solide pour contribuer à la résistance mécanique de la coque 12. La couche d'isolation 24 est par exemple une résine chargée d'un composé ou d'un élément chimique neutrophage, tel que le bore, et riche en hydrogène, ou une feuille d'un matériau métallique absorbant les neutrons, tel que le hafnium.

Dans une variante de l'invention, les couches 22, 24 et 26 sont remplacées par une unique couche interne métallique épaisse composée par exemple d'acier boré ou d'aluminium boré (quelques % de bore en masse).

La coque 12 comprend en option des éléments de renfort 31, ici sous la forme de poutres longitudinales disposées dans l'épaisseur de la coque 12, entre la couche interne 22 et la couche externe 30. Les éléments de renfort 31 sont par exemple des profilés métalliques à section en « I », dont un pied est fixé sur la couche interne 22, et dont l'âme s'étend radialement vers l'extérieur.

D'autres moyens adéquats de renfort mécanique peuvent être envisagés. Ainsi, en variante ou en option, des éléments de renfort internes sont prévus sous la forme de profilés plats, de tubes, de cornières ou de tôles ondulées placées chacune entre deux couches métalliques, par exemple entre la couche intermédiaire métallique 26 et la couche externe métallique 30 et/ou entre la couche interne métallique 22 et la couche intermédiaire métallique 26, et solidarisées par exemple par soudage à celles-ci.

En variante ou en option, la coque 12 comprend des éléments de renfort de la couche externe, par exemple sous la forme de nervures en saillie de la couche externe vers l'extérieur de la coque 12. Les nervures sont venues de matière avec la couche externe 30 ou rapportées sur celle-ci.

La coque 12 est formée de plusieurs parties de coque allongées suivant la direction longitudinale E.

Plus précisément, la coque 12 est formée par une première partie de coque formant un support 32 à section en « T » et une deuxième partie de coque constituée de deux portes 34 à section en « L ».

Le support 32 comprend la cloison 18 définissant le pied du « T » et deux ailes 38 s'étendant symétriquement de part et d'autre de la cloison 18, et définissant la barre du « T ». La cloison 18 est formée par une nervure d'une portion de la couche interne 22 remplie par la matière de la couche d'isolation 24 des ailes 38. Il en résulte que les logements 20 sont séparés par une couche d'isolation neutronique, ce qui évite l'initiation d'une réaction nucléaire entre deux assemblages de combustible nucléaire 2 disposés dans les logements 20.

Chaque porte 34 est fixée à une extrémité de la cloison 18 et à une extrémité d'une aile 38. Chaque logement 20 est défini par deux faces 40 du support 32 formant un V à 90°, et deux faces 42 d'une des port es 34, formant un V à 90°. Une des faces 40 du support 32 est une face de la cloison 18, et l'autre une face d'une aile 38.

Les faces 40 et 42 sont lisses sur toute la longueur du logement 20. Elles définissent une section correspondant sensiblement à celle des embouts 6 et des grilles 8 de l'assemblage 2 de la figure 1 destinés à être reçus dans les logements 20.

Le jeu latéral total entre les faces 40, 42 et les grilles 8 est compris entre 0,1 et 5 mm, de préférence entre 0,3 et 3 mm, encore de préférence entre 0.5 et 1 mm pour éviter un déplacement relatif de l'assemblage 2 dans le logement 20 dont l'amplitude serait dommageable pour l'assemblage reçu dans le logement, tout en permettant l'insertion longitudinale de l'assemblage 2 dans le logement 20.

Le conteneur 10 est dépourvu de moyens de serrage transversal des assemblages 2 à l'intérieur des logements 20. Le jeu faible existant entre l'assemblage 2 et le logement 20 permet de limiter les amplitudes du mouvement relatif entre l'assemblage 2 et le logement 20 et de conserver l'intégrité de l'assemblage 2.

Par ailleurs, il est possible de prévoir un léger serrage des assemblages 2 à l'intérieur des logements 20 du fait de la coopération entre le support 32 et les portes 34.

A cet effet, telle que représentée sur la figure 4 illustrant une vue en coupe transversale dans un plan différent de celui de la figure 3, la coque 12 comprend des éléments de fixation de chaque porte 34 sur le support 32 par serrage suivant une direction sensiblement parallèle à la droite passant par le sommet du V défini par les faces 42 de la porte 34 et le sommet du V défini par les faces 40 du support 32. Les éléments de fixation comprennent par exemple des vis 44 représentées schématiquement sur la figure 4. Des appuis élastiques par exemple en caoutchouc, peuvent être prévus dans les zones de contact entre les portes 34 et le support 32.

La couche externe 30 comprend des puits 46 s'étendant depuis la surface externe 16 jusqu'à la couche interne 22, pour le passage des vis 44. Les puits 46 forment avantageusement des entretoises de renfort s'étendant entre la couche externe 30 et la couche interne 22.

Il est possible d'ajuster la taille du logement 20 par ajouts de plaques de calage d'épaisseur adaptée sur une ou plusieurs des faces latérales 40, 42 des logements 20, afin de permettre le transport d'assemblages de combustible de tailles différentes.

En option, le couvercle 13 supérieur comprend un dispositif de serrage longitudinal de l'assemblage pour éviter tout déplacement de l'assemblage selon la direction longitudinale L de l'assemblage 2 dans le logement 20 après mise en place du couvercle 13 supérieur et fermeture du conteneur 10 et pendant toutes les opérations de manutention et de transport.

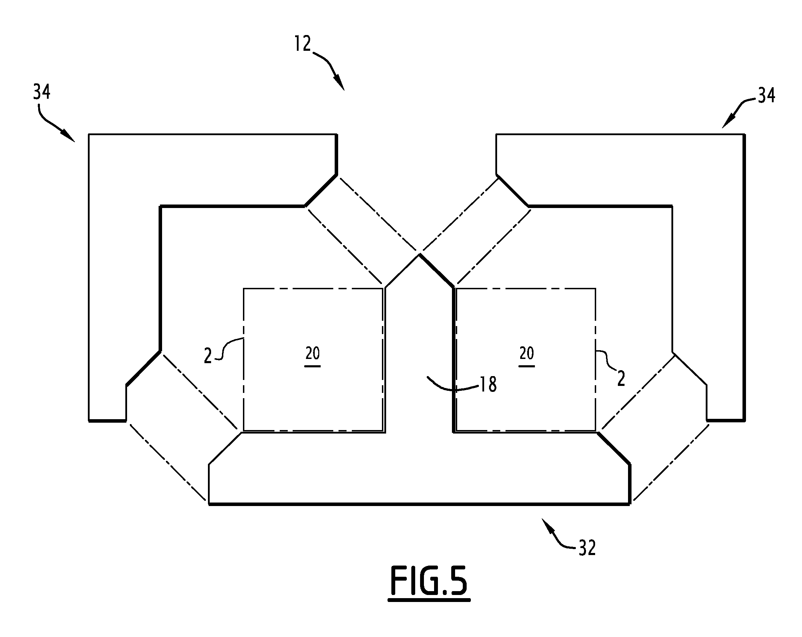

Tel que représenté sur la figure 5 illustrant une vue en bout de la coque 12, le chargement d'assemblages 2 peut être effectué en disposant le support 32 sur le sol, en dégageant les portes 34, en disposant les assemblages 2 sur le support 32, puis en refermant les portes 34 et en les serrant sur le support 32. Les couvercles 13 peuvent selon les cas être retirés ou non pour faire ce chargement. Le déchargement peut être réalisé de la même façon.

La faible surface d'occupation au sol et le faible encombrement du conteneur facilite son exploitation. Cette variante de chargement et de déchargement alors que le conteneur 10 est en position horizontale sera cependant plutôt utilisée pour les boîtes à crayons.

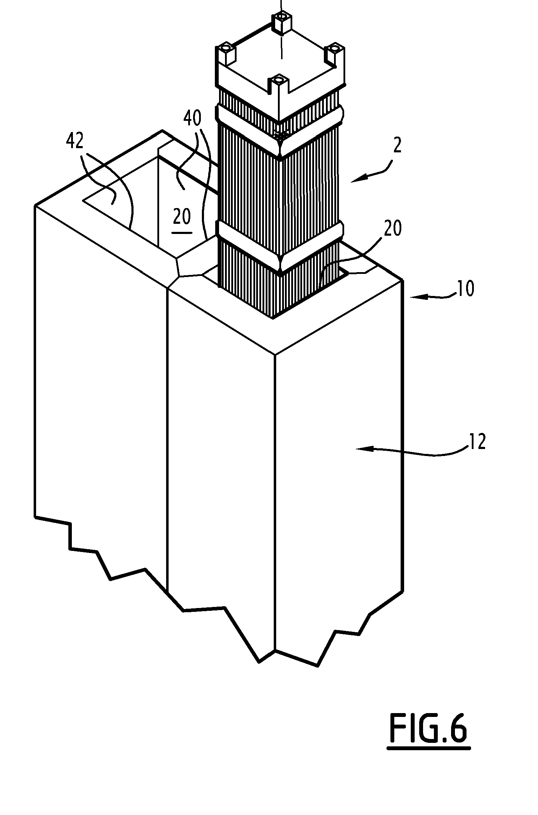

Tel que représenté sur la figure 6 représentant une vue en perspective, le chargement ou déchargement d'assemblages 2 peut être effectué en disposant le conteneur 10 en position verticale, le support 32 étant adossé à un mur ou à une structure de support, le couvercle 13 supérieur étant retiré, en saisissant l'assemblage 2 par son embout 6 supérieur, de manière connue avec une pince de levage appropriée, et en déplaçant l'assemblage 2 verticalement dans un des logements 20.

Ceci est possible du fait que les faces latérales 40, 42 sont sensiblement lisses sur toute la longueur et qu'on ne risque donc pas d'accrocher l'assemblage 2 sur un relief à l'intérieur du logement 20. Ce mode de chargement ou de déchargement permet un gain de place important car il évite de stocker le conteneur 10 en position horizontale et un gain de temps important car il évite de déposer les portes 34 : seul le couvercle 13 supérieur est à déposer.

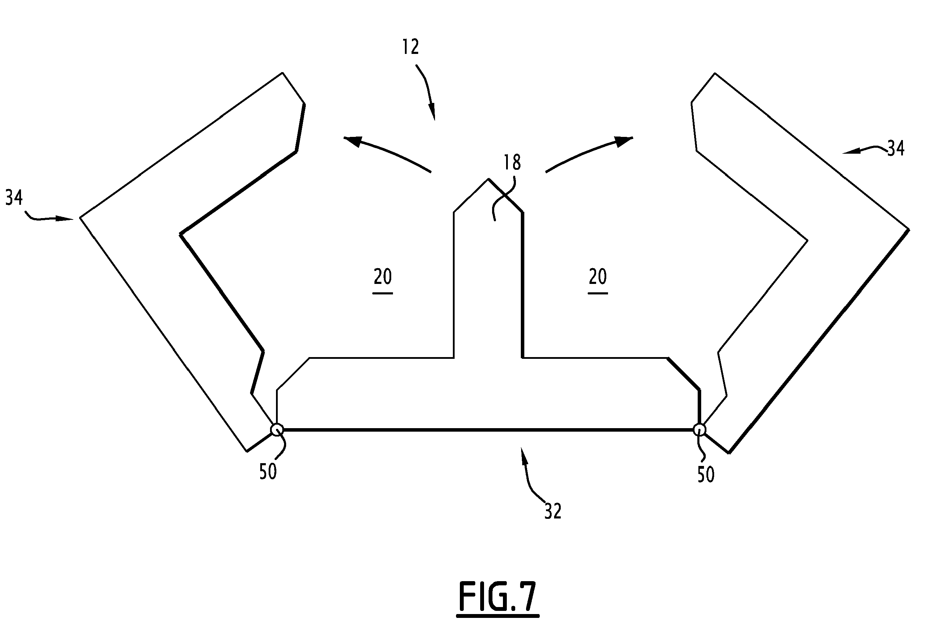

Dans une variante illustrée sur la figure 7, les portes 34 sont articulées sur les ailes 38 du support 32, par l'intermédiaire de charnières d'axes longitudinaux.

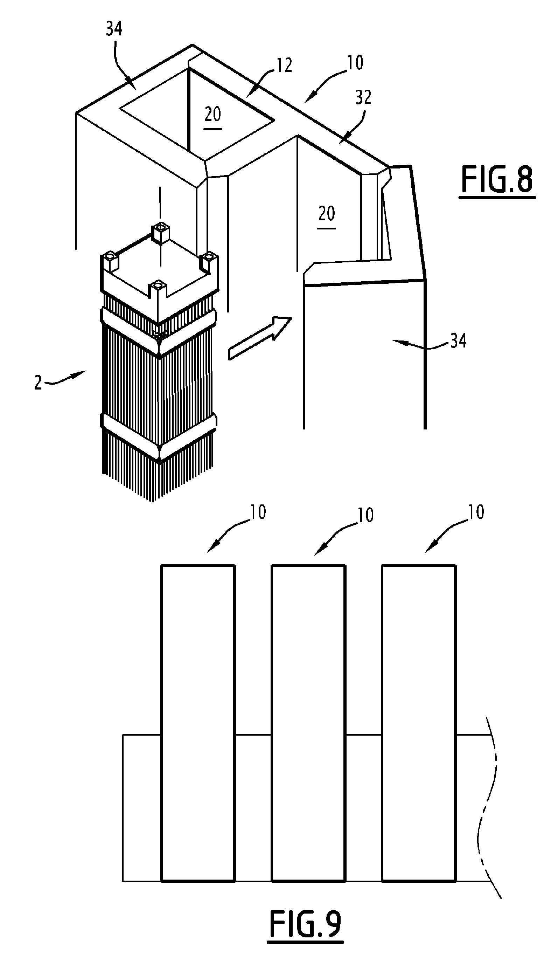

Il est possible de charger un tel conteneur de la façon illustrée sur la figure 6, par le dessus, ou de la façon illustrée sur la figure 8, par le côté. Pour ce faire, le conteneur 10 étant disposé en position verticale et le couvercle 13 supérieur retiré, on ouvre une porte 34 pour insérer ou retirer l'assemblage 2.

Ce mode de chargement est plus adapté lorsque la hauteur du bâtiment est limitée. Pour permettre l'ouverture d'une porte 34 en position verticale du conteneur 10, on prévoit que le couvercle 13 inférieur du conteneur 10 ne soit pas lié à la porte 34 pendant l'opération de chargement ou de déchargement.

Tel que représenté sur la figure 9, il est possible de prévoir dans une centrale nucléaire un dispositif d'entreposage du type râtelier, permettant d'entreposer une pluralité de conteneurs 10 verticalement les uns à côté des autres, avec un gain de place particulièrement important par rapport à un stockage en position horizontale et sans limitation de temps. En effet, avec un conteneur classique ne permettant qu'un stockage en position horizontale, la durée de stockage est limitée pour éviter un endommagement de l'assemblage qui n'est pas conçu pour être stocké horizontalement.

Les conteneurs doivent assurer la protection des assemblages de combustible nucléaire contre les chocs, notamment lors d'accidents, au cours du transport.

Les conteneurs de transport d'assemblage de combustible doivent passer des tests de qualification très stricts définis par des normes internationales telles que le Règlement de transport des matières radioactives de l'Agence Internationale de l'Energie Atomique (AIEA), l'Accord européen relatif au transport international des marchandises Dangereuses par Route (ADR), le Règlement concernant le Transport International Ferroviaire des Marchandises Dangereuses (RID), le Code Maritime International des Marchandises Dangereuses (IMDG).

En particulier, les conteneurs subissent notamment un test réglementaire de chutes d'une hauteur de 9 m, avec en général une première chute, la direction longitudinale du conteneur étant en position verticale et une seconde chute, la direction longitudinale du conteneur étant inclinée par rapport à l'horizontale d'une valeur déterminée pour provoquer le maximum d'endommagement, cette valeur d'inclinaison est par exemple de l'ordre de 15° pou r obtenir un effet de fouettement, et un test réglementaire de chute d'une hauteur de 1,5 m sur un poinçon, au cours desquels la couche interne 22 ne doit pas s'ouvrir.

L'enveloppe 11 formée par la coque 12 et les couvercles 13 est adaptée à elle seule pour le transport d'assemblage de combustible nucléaires non irradiés. En d'autres termes, elle est propre à elle seule à assurer la protection des assemblages de combustible nucléaire qu'elle contient au cours du transport, et en particulier au cours des tests réglementaires de chute.

En effet, la structure multicouche de la coque 12 lui confère une résistance mécanique aux chocs importante. La résistance mécanique de la coque 12 est déterminée entre autres par les dimensions suivantes :
- épaisseur des tôles formant les couches métalliques 22, 26, 30 ;
- matériau et épaisseur de la couche d'isolation 24 ;
- matériau et épaisseur de la couche de protection 28 ;
- matériau, forme, dimensions, nombre et position des éléments de renforts 31.

Les épaisseurs des différentes couches et la nature de celles-ci peuvent aisément être déterminées par la personne du métier à partir des caractéristiques des assemblages de combustible à transporter.

La nature et l'épaisseur de la couche d'isolation 24 dépendra par exemple de l'enrichissement en uranium 235 de la matière fissile contenue dans les crayons de combustible 4. Une étude de criticité permettra aisément de déterminer le matériau le plus approprié et l'épaisseur nécessaire : une feuille de hafnium de quelques centièmes à quelques dixièmes de mm d'épaisseur ou une tôle d'acier ou d'aluminium boré à quelques pourcents de bore d'une épaisseur de quelques millimètres (par exemple de 1.5 à 4 mm) associée à quelques centimètres de matériau modérateur tel que du polyéthylène équivalent à plusieurs centimètres (50 à 75 mm) de résine chargée à quelques pourcents de bore.

L'épaisseur des tôles 22, 26, 30 formant les couches métalliques et le matériau, la forme, les dimensions, le nombre et la position des éléments de renfort 31 seront déterminés par exemple à l'aide de calculs de résistance des matériaux afin d'éviter toute déformation du conteneur et des assemblages transportés et d'assurer la résistance mécanique nécessaire pour passer avec succès les tests réglementaires.

A titre d'exemple, les épaisseurs de tôles formant les couches métalliques 22, 26, 30 et d'éventuels éléments de renfort 31 prévus sous forme de tôles pliées seront avantageusement comprises entre 1 à 6 mm. Des éléments de renfort 31 sous forme de poutre en « I », pourront être par exemple dans la gamme 80-140 selon l'Euronorme 19-57.

La couche de protection 28 disposée à l'extérieur protège contre les chocs, et évite que la couche d'isolation 24 ne soit atteinte et déformée de façon pénalisante en cas de choc. Son épaisseur sera avantageusement comprise entre 30 et 150 mm.

La couche d'isolation 24 absorbe les neutrons émis par la matière fissile et évite leur dissémination hors du conteneur 10.

Toutes les couches sont regroupées au plus près des assemblages 2 reçus dans les logements 20, sans vide entre ces couches. Ceci permet de limiter l'encombrement et la masse du conteneur 10 par réduction du volume de matière, d'augmenter la résistance de la coque 12 aux chocs mécaniques, et de limiter l'énergie à dissiper en cas de chute du conteneur 10.

Les conteneurs doivent également assurer la protection des assemblages nucléaire en cas d'incendie en conditions normales de transport (conteneur intègre) mais aussi en conditions accidentelles de transport (conteneur endommagé après une chute selon les tests réglementaires précités).

Les conteneurs subissent notamment un test réglementaire de résistance au feu, au cours duquel ils doivent résister pendant 30mn à une température de 850°C provoquée par un feu d'hydrocarbures.

La coque 12 et les couvercles 13 sont propres à eux seuls à assurer la protection des assemblages de combustible nucléaire en cas d'incendie.

La structure stratifiée de la coque 12 assure une protection thermique efficace pour éviter une élévation de température dommageable pour l'assemblage et ses composants.

La couche de protection 28 est conçue pour former également une barrière contre la propagation de la chaleur depuis l'extérieur vers l'intérieur de la coque 12.

Dans une variante, une couche d'isolation thermique spécifique est ajoutée entre les couches métalliques 26 et 30.

Ainsi, la coque 12 et les couvercles 13 sont propres à eux seuls à assurer la protection des assemblages de combustible nucléaire non irradiés dans les différents tests réglementaires auxquels sont soumis les conteneurs avant d'être qualifiés pour le transport routier, ferroviaire, maritime ou aérien d'assemblages de combustible nucléaire non irradiés. Il n'est pas nécessaire de prévoir un suremballage.

Le conteneur 10 est particulièrement compact et léger. Sa manipulation en est facilitée, ainsi que son transport. Un plus grand nombre de conteneurs 10 peuvent être disposés sur un même moyen de transport, tel qu'un camion, un wagon de train ou un conteneur maritime ou aérien. Les coûts de transport et d'exploitation sont donc réduits.

La quantité d'absorbant neutronique et sa présence au plus près des assemblages de combustible permet aussi d'éviter tout risque d'initiation d'une réaction nucléaire entre plusieurs conteneurs 10 chargés, transportés ou stockés ensemble, sans limitation de nombre.

Tel que représenté sur la figure 2, le conteneur 10 comprend des éléments de fixation pour sa manipulation, son arrimage et son transport.

Le conteneur 10 comprend deux pieds 52 tubulaires fixés transversalement via une première face 16A de la surface externe 16 du conteneur 10 sur un élément de renfort 31. Les pieds 52 sont conçus pour permettre l'engagement et le blocage d'éléments de fixation installés sur le plateau de transport concerné (camion, wagon, conteneur maritime ou aérien) ou sur le conteneur ou la structure intermédiaire disposé en dessous du conteneur 10.

Le conteneur 10 comprend des éléments de fixation 54 fixés via une deuxième face 16B de la surface externe 16 du conteneur opposée à la première face sur un élément de renfort 31. Ces éléments de fixation 54 sont destinés à se fixer sur les pieds d'un autre conteneur empilé sur le conteneur 10 ou sur une structure intermédiaire.

Le conteneur 10 comprend sur la deuxième face 16B des tubes 56 de réception des fourches d'un chariot élévateur pour permettre le levage du conteneur et son placement sur un camion ou un wagon. Ces tubes 56 sont aménagés pour recevoir des éléments de fixation d'un outil de manutention et permettre aussi la manutention du conteneur par un moyen de levage adéquat (pont roulant, grue) et le chargement / déchargement vertical du plateau de transport.

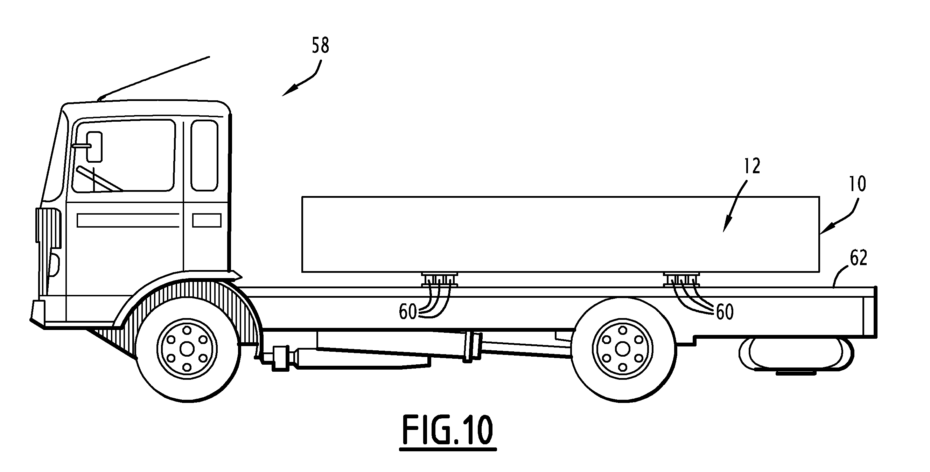

Tel qu'illustré sur la figure 10, selon un procédé de transport, on dispose au moins un assemblage de combustible nucléaire 2 non irradié dans le conteneur 10, on dispose le conteneur 10 sur un véhicule 58, notamment un véhicule de transport routier, et on transporte le conteneur 10 d'un premier site (par exemple un site de fabrication), à un deuxième site (par exemple une centrale nucléaire) en utilisant si nécessaire des moyens intermodaux (transports routier, ferroviaire, maritime et/ou aérien).

On dispose le conteneur 10 sur le véhicule 58 de façon que la coque 12 assure à elle seule la protection des assemblages 2 en cas de chute du conteneur. Ainsi, on ne dispose pas d'emballage supplémentaire fermé ou suremballage autour de la coque 12.

La résistance du conteneur 10 aux chocs que lui confère la structure multicouche de sa coque 12, améliorée encore par la couche de protection 28, et l'isolation neutronique que lui confère sa couche d'isolation 24, lui permettent d'être transporté sans suremballage.

Par ailleurs, les assemblages doivent être préservés des vibrations qui pourraient abîmer le support des crayons de combustible 4 dans les grilles 8 de maintien ou provoquer un déplacement axial de la colonne de pastilles de combustible et empêcher ou nuire à l'utilisation ultérieure de l'assemblage dans un réacteur nucléaire.

L'intégrité de l'assemblage de combustible nucléaire peut être préservée de manière efficace avec un conteneur 10 conforme à l'invention, comprenant une couche interne 22 reliée rigidement à une couche externe 30, sans suspensions, et dans lequel chaque assemblage 2 est maintenu dans un logement 20 correspondant seulement du fait des jeux faibles entre l'assemblage et les faces 40, 42 délimitant le logement 20.

Il est possible de prévoir des suspensions 60 entre le plateau de transport 62 du véhicule 58 et le conteneur 10 pour filtrer les vibrations induites par le transport. Les suspensions 60 sont par exemple de simples blocs élastomère.

Il est aussi possible de prévoir des suspensions entre le conteneur 10 et toute surface de dépose qu'il s'agisse d'un autre conteneur ou d'une structure intermédiaire situé en dessous du conteneur 10 lorsque les conteneurs sont gerbés sur le plateau de transport 62.

## Revendications

1. Conteneur (10) de transport pour assemblage de combustible nucléaire non irradié, comprenant une unique enveloppe (11) de réception d'au moins un assemblage de combustible nucléaire, l'enveloppe (11) étant formée d'une coque (12) tubulaire allongée, la coque (12) comprenant une couche interne (22) métallique délimitant au moins un logement (20) individuel de réception d'un assemblage de combustible nucléaire (2), et une couche externe (30) métallique entourant la couche interne (22), la couche interne (22) étant reliée rigidement à la couche externe (30) la coque (12) étant remplie entre sa couche interne (22) et sa couche externe (30), et de couvercles (13) de fermeture du ou de chaque logement (20) aux extrémités longitudinales de la coque (12), et dans lequel le jeu transversal entre les faces latérales du ou de chaque logement (20) individuel et un assemblage (2) destiné à être reçu à l'intérieur du logement (20) est compris entre 0.1 et 5 mm, de préférence entre 0.3 et 3 mm, et encore de préférence entre 0.5 et 1 mm.

2. Conteneur (10) selon la revendication 1, dans lequel la coque (12) comprend des faces latérales (40, 42) délimitant le ou chaque logement (20) individuel qui sont sensiblement lisses sur toute la longueur du logement (20).

3. Conteneur (10) selon la revendication 1 ou 2, dans lequel le jeu transversal entre des faces latérales du ou de chaque logement (20) individuel et un assemblage (2) destiné à être reçu à l'intérieur du logement est choisi de telle façon que les détériorations de l'assemblage (2) par mouvement relatif dans le logement (20) soient évitées.

4. Conteneur (10) selon l'une quelconque des revendications précédentes dans lequel le jeu transversal est adapté par ajout de plaques fixées sur les surfaces internes (14) des logements (20).

5. Conteneur (10) selon l'une quelconque des revendications précédentes, dans lequel le ou chaque logement (20) possède une section quadrangulaire définie par deux paires de faces latérales disposées en V, la coque (12) comprenant pour le ou chaque logement (20) un support (32) portant une des paires de faces latérales disposées en V, une porte (34) portant l'autre parmi les deux paires de faces latérales disposées en V, et des moyens (44, 46) de fixation de la porte (34) sur le support (32) permettent d'ajuster la position de la porte (34) et du support (32) suivant la direction transversale passant par les lignes d'intersection des paires de face disposées en V.

6. Conteneur (10) selon l'une quelconque des revendications précédentes, dans lequel la coque (12) comprend une couche intermédiaire d'isolation neutrophage (24) et une couche intermédiaire de protection contre les chocs (28).

7. Conteneur (10) selon la revendication 6, dans lequel une couche de protection thermique est ajoutée à la couche de protection contre les chocs

8. Conteneur (10) selon la revendication 6, dans lequel la couche de protection (28) entoure la couche d'isolation neutrophage (24).

9. Conteneur (10) selon la revendication 6, dans lequel la coque (12) comprend une couche intermédiaire de séparation (26) métallique séparant la couche d'isolation neutrophage (24) et la couche de protection (28).

10. Procédé de transport d'au moins un assemblage de combustible nucléaire, dans lequel on dispose au moins un assemblage de combustible nucléaire (2) non irradié dans un conteneur (10) selon l'une quelconque des revendications précédentes, on dispose le conteneur (10) sur un véhicule de transport de sorte que l'enveloppe (11) du conteneur (10) assure à elle seule la protection de l'assemblage de combustible nucléaire en cas de chute du conteneur (10), et on transporte le conteneur (10) d'un premier site à un deuxième site.

11. Procédé de transport selon la revendication 10, dans lequel on dispose des éléments de suspensions entre la coque (12) et une surface de dépose.

## Patentansprüche

1. Behälter (10) zum Transport für eine nicht strahlende, nukleare Brennstoffanordnung, aufweisend eine einzelne Hülle (11) zur Aufnahme wenigstens einer nuklearen Brennstoffanordnung, wobei die Hülle (11) von einem rohrförmigen langgestreckten Gehäuse (12) gebildet ist, wobei das Gehäuse (12) aufweist eine innere, metallische Schicht (22), die wenigstens eine individuelle Unterbringung (20) zur Aufnahme einer nuklearen Brennstoffanordnung (2) begrenzt, und eine externe, metallische Schicht (30), die die innere Schicht (22) umgibt, wobei die innere Schicht (22) fest mit der externen Schicht (30) verbunden ist, wobei das Gehäuse (12) zwischen seiner inneren Schicht (22) und seiner äußeren Schicht (30) ausgefüllt ist, und Deckel (13) zum Verschließen der oder jeder Unterbringung (20) an Längsenden des Gehäuses (12), wobei das Querspiel zwischen den seitlichen Flächen der oder jeder individuellen Unterbringung (20) und einer Anordnung (2), die dazu bestimmt ist, im Inneren der Aufnahme (20) aufgenommen zu sein, zwischen 0,1 und 5 mm, bevorzugt zwischen 0,3 und 3mm und weiter bevorzugt zwischen 0,5 und 1mm beträgt.

2. Behälter (10) gemäß Anspruch 1, wobei das Gehäuse (12) seitliche Flächen (40, 42) aufweist, die die oder jede individuelle Unterbringung (20) begrenzen und die deutlich glatt sind über die gesamte Länge der Unterbringung (20) hinweg.

3. Behälter (10) gemäß Anspruch 1 oder 2, wobei das Querspiel zwischen den seitlichen Flächen der oder jeder individuellen Unterbringung (20) und einer Anordnung (2), die dazu bestimmt ist, im Inneren der Unterbringung aufgenommen zu sein, derart gewählt ist, dass die Beschädigungen der Anordnung (2) durch Relativbewegung in der Unterbringung (20) vermieden sind.

4. Behälter (10) gemäß irgendeinem der vorhergehenden Ansprüche, wobei das Querspiel eingestellt ist durch Hinzufügung von Platten, die an den inneren Flächen (14) der Unterbringung (20) fixiert sind.

5. Behälter (10) gemäß irgendeinem der vorhergehenden Ansprüche, wobei die oder jede Unterbringung (20) einen viereckigen Querschnitt hat, der von zwei Paaren seitlicher Flächen, die in V-Form angeordnet sind, definiert ist, wobei das Gehäuse (12) für die oder jede Unterbringung (20) aufweist einen Halter (32), der eines der Paare seitlicher Flächen, die in V-Form angeordnet sind, trägt, eine Tür (34), die das andere der beiden Paare seitlicher Flächen, die in V-Form angeordnet sind, trägt, und Mittel (44, 46) zur Fixierung der Tür (34) an dem Halter (32), die es erlauben, die Position der Tür (34) und des Halters (32) entlang der Querrichtung einzustellen, durch welche die Schnittlinien der Flächen-Paare, die in V-Form angeordnet sind, passieren.

6. Behälter (10) gemäß irgendeinem der vorhergehenden Ansprüche, wobei das Gehäuse (12) eine neutrophage Isolations-Zwischenschicht (24) und eine Zwischenschicht zum Schutz gegen Stöße (28) aufweist.

7. Behälter (10) gemäß Anspruch 6, wobei eine Schicht zum thermischen Schutz zu der Schicht zum Schutz gegen Stöße hinzugefügt ist.

8. Behälter (10) gemäß Anspruch 6, wobei die Schicht zum Schutz (28) die neutrophage Isolations-Schicht (24) umgibt.

9. Behälter (10) gemäß Anspruch 6, wobei das Gehäuse (12) eine metallische Trenn-Zwischenschicht (26) aufweist, welche die neutrophage Isolations-Schicht (24) und die Schicht zum Schutz (28) trennt.

10. Verfahren zum Transport wenigstens einer nuklearen Brennstoff-Anordnung, bei welchem man wenigstens eine nicht strahlende, nukleare Brennstoff-Anordnung (2) in einem Behälter (10) gemäß irgendeinem der vorhergehenden Ansprüche transportiert, man den Behälter (10) auf einem Transportfahrzeug anordnet, sodass allein die Hülle (11) des Behälters (10) den Schutz der nuklearen Brennstoff-Anordnung im Falle eines Sturzes des Behälters (10) gewährleistet, und man den Behälter (10) von einem ersten Standort zu einem zweiten Standort transportiert.

11. Verfahren zum Transport gemäß Anspruch 10, wobei man Federmittel zwischen dem Gehäuse (12) und einer Anordnungsfläche anordnet.

## Claims

1. Transport container (10) for a non-irradiated nuclear fuel assembly, comprising a single casing (11) for receiving at least one nuclear fuel assembly, the casing (11) being formed from an elongate tubular shell (12), the shell (12) comprising a metallic internal layer (22) delimiting at least one individual housing (20) for receiving a nuclear fuel assembly (2), and a metallic external layer (30) surrounding the internal layer (22), the internal layer (22) being rigidly connected to the external layer (30), the shell (12) being filled between its internal layer (22) and its external layer (30), and from lids (13) for closing the or each housing (20) at the longitudinal ends of the shell (12), and wherein the transverse clearance between the lateral faces of the or each individual housing (20) and an assembly (2) which is to be received inside the housing (20) is from 0.1 to 5 mm, preferably from 0.3 to 3 mm, and even more preferably from 0.5 to 1 mm.

2. Container (10) according to claim 1, wherein the shell (12) comprises lateral faces (40, 42) which delimit the or each individual housing (20) and which are substantially smooth over the entire length of the housing (20).

3. Container (10) according to claim 1 or 2, wherein the transverse clearance between lateral faces of the or each individual housing (20) and an assembly (2) which is to be received inside the housing is selected in such a manner that damage to the assembly (2) caused by relative movement in the housing (20) is avoided.

4. Container (10) according to any one of the preceding claims, wherein the transverse clearance is adjusted by adding plates which are secured to the internal surfaces (14) of the housings (20).

5. Container (10) according to any one of the preceding claims, wherein the or each housing (20) has a quadrangular cross-section defined by two pairs of lateral faces arranged in the shape of a V, the shell (12) comprising for the or each housing (20) a support (32) carrying one of the pairs of lateral faces arranged in the shape of a V, a door (34) carrying the other of the two pairs of lateral faces arranged in the shape of a V, and means (44, 46) for securing the door (34) to the support (32) enabling the position of the door (34) and the support (32) to be adjusted in the transverse direction passing via the lines of intersection of the pairs of faces arranged in the shape of a V.

6. Container (10) according to any one of the preceding claims, wherein the shell (12) comprises an intermediate layer (24) for neutrophage insulation and an intermediate layer (28) for protection against impact.

7. Container (10) according to claim 6, wherein a layer for thermal protection is added to the layer for protection against impact.

8. Container (10) according to claim 6, wherein the protective layer (28) surrounds the neutrophage insulation layer (24).

9. Container (10) according to claim 6, wherein the shell (12) comprises an intermediate metallic separation layer (26) separating the neutrophage insulation layer (24) and the protective layer (28).

10. Method of transporting at least one nuclear fuel assembly, wherein at least one non-irradiated nuclear fuel assembly (2) is placed in a container (10) according to any one of the preceding claims, the container (10) is placed on a transport vehicle in such a manner that the casing (11) of the container (10) protects by itself the nuclear fuel assembly in the event of the container (10) falling, and the container (10) is transported from a first site to a second site.

11. Transport method according to claim 10, wherein suspension members are arranged between the shell (12) and a deposit surface.
